# EUROPÄISCHE PATENTSCHRIFT

(11) **EP 3 228 494 B1**
(45) Veröffentlichungstag und Bekanntmachung des Hinweises auf die Patenterteilung: **02.01.2019**
(21) Anmeldenummer: 17000429.5
(22) Anmeldetag: 16.03.2017
(51) Int. Cl.: B60N 2/56

(54) **KLIMATISIERUNGSEINRICHTUNG FÜR EINEN FAHRZEUGSITZ**
AIR CONDITIONING UNIT FOR A VEHICLE SEAT
DISPOSITIF DE CLIMATISATION POUR UN SIÈGE DE VÉHICULE

(30) Priorität: 04.04.2016 DE 202016002041 U
(43) Veröffentlichungstag der Anmeldung: 11.10.2017
(73) Patentinhaber: I.G. Bauerhin GmbH, 63584 Gründau (DE)
(72) Erfinder: Bauer, Stefan, 63755 Gründau (DE); Henß, Felix, 63639 Flörsbachtal (DE); Bialek, Saskia, 63607 Wächtersbach (DE); Schleucher, Thorsten, 63594 Hasselroth (DE); Michelmann, Jochen, 63571 Gelnhausen (DE)
(74) Vertreter: Grimm, Ekkehard

(56) Entgegenhaltungen:
- EP-A1- 2 826 663
- DE-U1-202013 006 136

## Beschreibung

Die vorliegende Erfindung betrifft eine Klimatisierungseinrichtung für einen Fahrzeugsitz.

Eine solche Klimatisierungseinrichtung umfasst mindestens ein Luftverteilungsmodul, das mindestens einen Luftverteilungsraum aufweist. Der Luftverteilungsraum ist zumindest an einem Teil seines Außenumfangs durch eine Einlage, die eine Oberseite und eine Unterseite aufweist, begrenzt. Auf der Seite, die der Unterseite der Einlage zugeordnet ist, ist der Luftverteilungsraum durch eine Trägerschicht begrenzt. Diese Trägerschicht ist mit der Unterseite der Einlage zumindest über eine Teilfläche verbunden. Es ist eine Luftzuführöffnung vorgesehen, um Luft in den Luftverteilungsraum zuzuführen.

Die EP 2 826 663 A1 beschreibt eine Klimatisierungseinrichtung für einen Fahrzeugsitz, die ein Abstandsmaterial umfasst, das zumindest einen Teil eines Luftverteilungsraums bildet. Das Abstandsmaterial ist auf der Oberseite durch eine Oberseitenschicht abgedeckt. Auf der der Oberseitenschicht gegenüber liegenden Unterseite des Abstandsmaterials ist eine für Luft undurchlässige Unterseitenschicht angeordnet. Die Oberseitenschicht und die Unterseitenschicht sind um den Außenumfang des Abstandsmaterials herum verbunden. Weiterhin sind eine Luftzuführöffnung zu dem Luftverteilungsraum sowie Luftaustrittsöffnungen in der Oberseitenschicht zur Abgabe von Luft aus dem Luftverteilungsraum vorgesehen. Die Oberseitenschicht und die Unterseitenschicht sind zumindest um den Außenumfang herum über eine rahmenförmige Einlage miteinander verbunden.

Die US 2007/0277313 A1 beschreibt einen klimatisierten Sitz. Dieser Sitz umfasst ein Sitzkissen, durch das eine Vielzahl von Strömungsdurchgängen von dessen Oberseite zu dessen Unterseite führt. Auf der Unterseite des Sitzkissens ist ein Stützelement angeordnet. Über einen Verteilungsraum wird Luft auf die Strömungsdurchgänge verteilt und zu der Sitzfläche geführt. Das Stützelement steht in direktem Kontakt mit der Unterseite des Sitzkissens. Der Luftverteilungsraum ist durch eine Ausnehmung in dem Sitzkissen gebildet.

Die Aufgabe der vorliegenden Erfindung ist unter anderem darin zu sehen, eine Klimatisierungseinrichtung zu schaffen, die einen einfachen Aufbau besitzt, Nachteile, wie sie im Stand der Technik gegeben sind, vermeidet und auch das Strömungsverhalten der Klimatisierungseinrichtung verbessert.

Die Erfindung ist in einer Klimatisierungseinrichtung für einen Fahrzeugsitz gemäß Anspruch 1 zu sehen. Bevorzugte Ausführungsformen ergeben sich unter anderem aus den abhängigen Ansprüchen. Weitere Merkmale, die als bevorzugt anzusehen sind, werden in der nachfolgenden Beschreibung erwähnt.

Die Klimatisierungseinrichtung umfasst ein Luftverteilungsmodul mit mindestens einem Luftverteilungsraum. Dieser Luftverteilungsraum dient dazu, Luft, die von einem Lüfter oder einer anderen Einrichtung zugeführt wird, über einen größeren Flächenbereich des Sitzpolsters, bevorzugt auf der Unterseite des Sitzpolsters, üblicherweise als B-Seite bezeichnet, zu verteilen. Es ist aber nicht ausgeschlossen, dass ein solcher Luftverteilungsraum auch auf der Oberseite oder sowohl auf der Unterseite als auch auf der Oberseite angeordnet werden kann.

Der Luftverteilungsraum wird zumindest an einem Teil seines Außenumfangs durch eine Einlage, die eine Oberseite und eine Unterseite aufweist, begrenzt. Auf der Unterseite der Einlage ist eine Trägerschicht angeordnet, die folglich auf dieser Unterseite den Luftverteilungsraum begrenzt. Die Trägerschicht deckt zumindest eine Teilfläche der Einlage ab und ist mit dieser verbunden, das bedeutet, sie ist beispielsweise an der Einlage vollflächig oder teilflächig verklebt. Ein Verkleben bedeutet in diesem Fall, dass die Trägerschicht und die entsprechende Fläche an der Unterseite der Einlage derart verbunden sind, dass im Wesentlichen keine Luft in dem Bereich dieser Verbindung von dem Luftverteilungsraum entweichen kann. Insofern umfasst ein Verkleben auch andere, gleichwertige Verbindungsmaßnahmen, wie beispielsweise eine Verbindung über einen Klettverschluss, eine Verbindung durch eine Verschweißung, und dergleichen.

Um von einem Lüfter, der speziell zu diesem Zweck vorgesehen ist, Luft in den Luftverteilungsraum zuzuführen, ist in der Einlage zumindest eine Unterbrechung vorgesehen, und/oder eine Öffnung ist in der Trägerschicht ausgebildet, so dass die Luft alternativ, oder auch zusätzlich, über die Trägerschicht dem Luftverteilungsraum zugeführt werden kann. In einer Ausführungsform ist nicht nur die Einlage unterbrochen, sondern im Bereich dieser Unterbrechung ist auch eine Öffnung in der Trägerschicht vorhanden, so dass letztendlich am Rand dieses Luftverteilungsmoduls ein Lüfter oder ein entsprechender Luftschlauch, so angeschlossen werden kann, dass er gleichzeitig über die Unterbrechung in der Einlage und über die Öffnung in der Trägerschicht Luft zuführt. Ein Lüfter kann hierbei derart mit dem Luftverteilungsmodul verbunden werden, dass er axial Luft oder auch radial Luft in den Luftverteilungsraum führt; entsprechend wird entweder ein Axiallüfter oder ein Radiallüfter oder ein Diagonallüfter verwendet. In einer besonderen Ausführungsform wird zwischen dem Lüfter und der Lufteintrittsöffnung in den Luftverteilungsraum ein Zwischengehäuseteil eingesetzt; das eine Ende dieses Zwischengehäuseteils wird dabei mit dem Luftverteilungsraum verbunden, während das andere Ende dieses Zwischengehäuseteils mit einem Lüfter oder Lüftergehäuse verbunden wird.

Die Oberseite des Luftverteilungsmoduls, d.h. die Seite, die der Trägerschicht gegenüber liegt, verbleibt offen. Auf dieser Seite wird der Luftverteilungsraum durch einen Teil des Polsterteils, gegen das sich entsprechend die Oberseite der Einlage anlegt, abgedeckt; vorzugsweise wird hierzu das Einlegeteil mit seiner Oberseite in eine vorzugsweise angepasste Ausnehmung in einem Polsterteil eingelegt.

Ein besonderes Merkmal der erfindungsgemäßen Klimatisierungseinrichtung ist darin zu sehen, dass in den Luftverteilungsraum keine Elemente eingesetzt sind, die sich in dem Luftverteilungsraum von der Trägerschicht senkrecht zu der Ebene hin erstrecken, die durch die Oberseite der Einlage aufgespannt wird. Dadurch ergeben sich keine großen Strömungswiderstände für die in den Luftverteilungsraum zugeführte Luft. Es entstehen, wenn überhaupt, nur geringe Verwirbelungen und eine Geräuschentwicklung, verursacht durch die Luftströmung in dem Luftverteilungsraum, ist, sollte sie auftreten, äußerst gering. Die Angabe, dass der Luftverteilungsraum frei von irgendwelchen Teilen ist, bedeutet aber nicht, dass in dem Luftverteilungsraum die Trägerschicht nicht auch durch ein Flächenelement abgedeckt werden kann. Ein solches Flächenelement kann insbesondere dazu dienen, den Luftverteilungsraum so auszusteifen, dass er in einer Richtung, parallel zu der Trägerschicht, nicht kollabieren kann, so dass er eine gewisse Formstabilität erhält. Allerdings sollte der Luftverteilungsraum über mindestens 80% seines Volumens völlig frei belassen werden.

Wie bereits vorstehend erwähnt, kann der Luftverteilungsraum auf der der Trägerschicht gegenüber liegenden Oberseite offen. Diese Angabe beinhaltet allerdings, dass der Luftverteilungsraum durch ein anderes Teil des Sitzes bzw. Polsters ganz oder teilweise abgedeckt werden kann.

In einer weiteren Ausgestaltung kann vorgesehen sein, dass der Luftverteilungsraum auf der der Trägerschicht gegenüber liegenden Oberseite mit einer im Wesentlichen luftdurchlässigen und zumindest teilweise abdeckenden Deckschicht, die nicht Teil des Sitzes ist, versehen ist. Diese Deckschicht kann mittels Befestigungsmitteln, beispielsweise einem doppelseitigen Klebematerial oder einem Klettverschluss, an dem Sitz bzw. einem Sitz- oder Lehnenpolster befestigt werden.

Wesentlich ist, dass die Trägerschicht mindestens einen Verlängerungsabschnitt für eine Befestigung eines Lüfters, eines Gehäuses eines Lüfters oder einer Lüfterhalterung eines Lüfters an dem Luftverteilungsmodul aufweist. Ein solcher Verlängerungsabschnitt ist ein Teil der Trägerschicht, der über den Teil der Trägerschicht vorsteht, der nicht durch die Unterseite der Einlage abgedeckt ist. Dieser Verlängerungsabschnitt dient dazu, den Lüfter, das Gehäuse eines Lüfters und/oder eine Lüfterhalterung des Lüfters an dem Luftverteilungsmodul zu halten und zu befestigen. Hierzu wird nämlich der Verlängerungsabschnitt der Trägerschicht so um den Lüfter, um das Gehäuse eines Lüfters oder die Lüfterhalterung eines Lüfters gelegt, dass sie unmittelbar, zumindest in einem wesentlichen Umfang, an dem Luftverteilungsmodul befestigt werden kann.

Diese Maßnahme hat den Vorteil, dass keine zusätzlichen Befestigungsteile erforderlich sind, sofern die ohnehin vorhandene Trägerschicht für diesen Zweck herangezogen wird, indem sie im Zuschnitt entsprechend in Bereichen, die dem Lüfter, dem Gehäuse eines Lüfters oder einer Lüfterhalterung eines Lüfters zugeordnet sind, verlängert wird.

Trägerschicht und Verlängerungsabschnitt können einstückig ausgeführt werden, das bedeutet, der entsprechende Zuschnitt ist ein zusammenhängendes Flächenelement. Die Angabe einstückig schließt allerdings nicht aus, dass Trägerschicht und Verlängerungsabschnitt aus zwei Flächenteilen zusammengesetzt werden, obwohl dies nicht notwendig ist. Möglicherweise kann aber der Verlängerungsabschnitt aus einem Material gebildet werden, das unterschiedlich zu dem Material der Trägerschicht ist, obwohl bevorzugt für beide Teile dasselbe Material verwendet wird.

Der Verlängerungsabschnitt kann beispielsweise immer dann an die Trägerschicht angesetzt werden, wenn der Verlängerungsabschnitt, oder auch mehrere Verlängerungsabschnitte, aus Laschen ausgeformt sind, oder aus langen, streifenförmigen Materialbahnen, die eine solche Länge aufweisen, dass sie den Lüfter, das Gehäuse eines Lüfters oder die Lüfterhalterung eines Lüfters weitestgehend vollständig umschließen. Für einen solchen Fall ist es im Hinblick auf einen Materialverbrauch angebracht, den Verlängerungsabschnitt oder die Verlängerungsabschnitte an die Trägerschicht, die auf der Unterseite der Einlage angeordnet ist, anzusetzen.

Die Trägerschicht ist im Wesentlichen für Luft undurchlässig, so dass die in den Luftverteilungsraum zugeführte Luft annähernd vollständig über die gegenüber liegende offene Seite, d.h. die Oberseite, der Einlage zu der zu belüftenden Fläche des Sitzes geführt wird. Wenn der mindestens eine Verlängerungsabschnitt an die Trägerschicht angesetzt wird, wie dies vorstehend beschrieben ist, könnte für den Verlängerungsabschnitt auch ein von dem Material der Trägerschicht abweichendes Material verwendet werden.

Die Trägerschicht kann aus einem Polyestermaterial, vorzugsweise aus einem vlies-ähnlichen Polyestermaterial, gebildet werden, das zusätzlich auf zumindest einer Seitenfläche angeschmolzen und/oder im Wesentlichen für Luft undurchlässig verdichtet ist. Allerdings sind auch andere Maßnahmen denkbar, um die Luftdurchlässigkeit der Trägerschicht gering zu halten, zum Beispiel durch eine Imprägnierung des Materials der Trägerschicht mit einem Harz. Auch kann die Trägerschicht mit einer zusätzlichen Folie ausgestattet werden, die je nach Erfordernis zumindest teilweise luftdurchlässig oder im Wesentlichen luftundurchlässig sein kann.

Der Verlängerungsabschnitt besitzt vorzugsweise eine annähernd rechteckige oder trapezförmige Kontur, mit solchen Abmessungen, dass sie einen Lüfter zum Zwecke der Befestigung an dem Luftverteilungsmodul annähernd vollständig abdeckt, allerdings nur so, dass die entsprechende Luftansaugöffnung des Lüfters nicht wesentlich abgedeckt wird, um das Ansaugen der Luft nicht zu behindern.

Soweit in der Beschreibung nur der Lüfter für die Luftzuführung erwähnt ist, fallen hierunter auch das Gehäuse eines Lüfters oder die Lüfterhalterung eines Lüfters in dem Umfang, wie dies die jeweils beschriebene Ausführungsform oder das jeweils beschriebene Merkmal aus konstruktiven Gründen zulassen.

Es ist vorgesehen, dass der Verlängerungsabschnitt auf seiner Oberseite und/oder Unterseite mindestens eine Klebeschicht aufweist, insbesondere im Randbereich oder Endbereich des Verlängerungsabschnitts, mit der der Verlängerungsabschnitt an dem Lüfter (Lüftergehäuse) oder an der Oberseite der Einlage oder an der Unterseite der Trägerschicht verbunden werden kann, wobei hierzu die Trägerschichten entsprechend umgelegt werden.

Ein besonderes Merkmal der Erfindung in einer speziellen Ausführungsform ist dasjenige, dass die Trägerschicht im Übergangsbereich zu dem Verlängerungsabschnitt einen Schlitz aufweist, der im Bereich der eine Luftzuführöffnung bildenden Unterbrechung der Einlage dort positioniert ist, wo der Verlängerungsabschnitt der Trägerschicht ansetzt. In diesem Bereich wird der Verlängerungsabschnitt auf die Oberseite der Einlage umgelegt und an der Oberseite der Einlage befestigt, wobei er gleichzeitig den Lüfter umschließt, so dass der Lüfter durch den Verlängerungsabschnitt gehalten wird. Mit anderen Worten liegt der Schlitz, der auch als ein Langloch bezeichnet werden kann, in dem Knickbereich des Verlängerungsabschnitts, wo der Verlängerungsabschnitt vorzugsweise aus der die Unterseite der Einlage aufspannenden Ebene zur Oberseite der Einlage umgelegt ist.

Der Verlängerungsabschnitt kann an mindestens einer freien Seite, die nicht zu der Seite gegenüberliegt, an der der Verlängerungsabschnitt auf die Oberseite der Einlage umgelegt ist, mindestens einen Laschenabschnitt aufweisen. Es ist aber auch vorgesehen, dass der Verlängerungsabschnitt mindestens jeweils einen Laschenabschnitt an zwei gegenüberliegenden Seiten aufweist, die jeweils zumindest mit ihren freien Enden auf der Oberseite der Einlage befestigt sind. Im letzteren Fall bilden die Laschen mit dem Verlängerungsabschnitt im Zuschnitt eine T-Form.

Der Verlängerungsabschnitt kann auch mindestens jeweils einen Laschenabschnitt an zwei gegenüberliegenden Seiten aufweisen, wie dies vorstehend beschrieben ist, die jeweils eine solche Länge aufweisen, dass sie zunächst zu der Oberseite der Einlage, auf dieser aufliegend, geführt und von dort wieder zu der Unterseite der Einlage geführt werden, und dass sie zumindest mit ihren freien Enden auf der Unterseite der Einlage an der Trägerschicht, bevorzugt an deren Außenseite, befestigt sind.

Um die Einlage beispielsweise an einem Polsterteil zu befestigen, aber auch um den Verlängerungsabschnitt der Trägerschicht an der Einlage zu befestigen; ist an der Oberseite der Einlage mindestens eine Klebeschicht aufgebracht, die vorzugsweise einen überwiegenden Teil der Fläche dieser Oberseite abdeckt.

Für den Fall, dass der Verlängerungsabschnitt der Trägerschicht irgendwelche diesem zugeordnete Laschen, um sie an dem Luftverteilungsmodul zu befestigen, aufweist, werden die Flächenseiten der Lasche, die der Innenseite der Trägerschicht, die dem Luftverteilungsraum zugewandt ist, entsprechen, zumindest über eine Teilfläche mit mindestens einer Klebeschicht versehen. So können die Laschen unmittelbar mit der Einlage oder der Trägerschicht, auf diese zurückgeführt, verbunden werden. Anstelle einer Klebeschicht kann auch ein Klettverschluss oder ein Noppenverschluss oder ein oder mehrere Kabelbinder verwendet werden.

Für den Fall, dass der Verlängerungsabschnitt der Trägerschicht irgendwelche diesem zugeordnete Laschen aufweist, um mit diesen ein Luftverteilungsmodul zu befestigen, beispielsweise einen Lüfter, können die Laschen, die zumindest teilweise an dem Verlängerungsabschnitt gegenüberliegend oder zumindest teilweise um eine Mittellinie des Verlängerungsabschnitts gespiegelt ausgebildet sind, geeignet gefaltet oder mehrfach gefaltet werden, um sie zu dem Luftverteilungsmodul zu führen. Eine solche Faltungstechnik, die in Bezug auf die Laschen angewandt werden kann, ist in der Papierfaltungstechnik unter der Bezeichnung Origami bekannt. Mittels dieser Faltungstechnik können die Enden der Laschen so ineinander gefaltet werden, dass keine zusätzlichen Klebschichten oder die Anwendung anderer Verschlussarten erforderlich sind.

Eine weitere vorteilhafte Befestigungsmethode besteht darin, den Lüfter, das Gehäuse eines Lüfters oder die Lüfterhalterung eines Lüfters mittels Ultraschallschweißen oder Heißverstemmen oder Hochfrequenzschweißen oder Laserdurchstrahlschweißen oder Zirkularschweißen oder Rotationsreibschweißen oder Ultraschallschweißen oder Vibrationsschweißen oder Warmgasschweißen an der oder mit der Trägerschicht zu befestigen.

Besonders zweckmäßig ist eine Ausführungsform, bei der der Lüfter, das Gehäuse eines Lüfters oder die Lüfterhalterung eines Lüfters eine im Wesentlichen formstabile Zunge aufweist, die sich an die Innenseite des den Luftverteilungsraum begrenzenden Teils der Trägerschicht im Wesentlichen flächig anlegt. Diese Zunge bildet eine stabile Verlängerung, die unmittelbar mit der Luftzuführeinrichtung verbunden ist und in dem Luftverteilungsmodul verankert wird, indem sich die Zunge an die Trägerschicht anlegt und/oder zwischen Trägerschichten und Unterseite der Einlage eingeklemmt gehalten wird.

Besonders bevorzugt, und als eigenständiger Erfindungsgedanke anzusehen, ist ein Aufbau des Klimatisierungsmoduls, bei dem in den mindestens einen Luftverteilungsraum ein Versteifungselement eingelegt ist, das zumindest eine Grundplatte aufweist, die auf der Trägerschicht zumindest über eine Teilfläche aufliegt. Diese Einlage bildet eine Aussteifung des mindestens einen Luftverteilungsraums, so dass dieser unter Belastung nicht kollabieren kann. Hierunter ist zu verstehen, dass die Einlage verhindert, dass der Luftverteilungsraum in der Ebene, in der sich das Versteifungselement erstreckt, seine Abmessungen und Form nicht wesentlich durch das Versteifungselement verändert. Allerdings ist ein solches Versteifungselement nicht in allen Anwendungsfällen der Klimatisierungseinrichtung bzw. des Luftverteilungsmoduls erforderlich und es sollte insbesondere dann angewendet werden, wenn die Einbausituation der Klimatisierungseinrichtung in einen Sitz zu Krafteinwirkungen auf den Luftverteilungsraum führt oder entsprechende Kräfte bei der Benutzung des Sitzes zu erwarten sind.

In einer Ausführungsform weist das Versteifungselement an zwei gegenüberliegenden Seiten Halteteile auf, die sich an zwei gegenüberliegenden Seiten der Einlage, die den Luftverteilungsraum begrenzen, anlegen und/oder abstützen. Dadurch werden Kräfte, die über die Einlage auf das Versteifungselement einwirken, oder Kräfte, die über das Versteifungselement auf die Einlage übertragen werden, über einen größeren Flächenbereich der Seitenwände der Einlage, die den Luftverteilungsraum begrenzen, verteilt. Dieser Effekt kann noch dadurch verstärkt werden, dass sich die jeweiligen Halteteile an den gegenüberliegenden Seiten der Einlage abstützen und sich zusätzlich auf der Oberseite der Einlage, das bedeutet auf der Seite der Einlage, die der Trägerschicht gegenüberliegt, anlegen. Im Querschnitt gesehen sind die Halteteile, von dem Rand der Trägerschicht ausgehend, L-förmig ausgebildet. Allerdings sind andere Formen dieser Halteteile möglich, sofern sie die vorstehend angegebene Aufgabe zumindest teilweise erfüllen.

Die vorstehend beschriebenen Halteteile sind vorzugsweise einstückig mit der Grundplatte des Versteifungselements verbunden, obwohl sie auch an die Grundplatte angesetzt sein können.

Eine weitere, vorteilhafte Maßnahme ist diejenige, dass die Halteteile jeweils in eine Vielzahl von Halteelementen in Form von zungenartigen Teilen entlang der Grundplatte unterteilt sind, so dass sie sich fortlaufend aneinander reihen und unabhängig voneinander bewegbar sind. Diese Halteelemente sind vorzugweise nur durch einen kleinen Spalt, mit einer bevorzugten Spaltbreite von 1 mm bis 2 mm, getrennt und haben eine Breite, die vorzugsweise bei 5 mm bis 10 mm liegen. Es ist aber auch vorgesehen, dass die benachbarten Halteelemente im Bereich von 10 mm bis 20 mm zueinander beabstandet sind. Derartige Halteelemente, die voneinander entkoppelt sind, lassen zumindest eine geringe Wölbung bzw. Beweglichkeit der Grundplatte bzw. des Versteifungselements zu, so dass sich das Luftverteilungsmodul einer geringen Bewegung und Verformung eines Sitzpolsters anpassen kann.

Das Versteifungselement kann an einer Seite, die der Luftzuführöffnung zugeordnet ist, verlängert werden und als rohrförmiger Kanal zur Aufnahme und/oder zum Anschluss eines Lüfters oder des Lüftergehäuses eines Lüfters oder der Lüfterhalterung eines Lüfters ausgebildet werden, so dass an dem Luftverteilungsmodul eine stabile Basis für eine solche Aufnahme und/oder Befestigung gegeben ist. In einem solchen Fall übernimmt folglich das Versteifungselement eine doppelte Funktion, nämlich die Aussteifung des Luftverteilungsraums und die Möglichkeit, daran direkt oder indirekt den Lüfter zu befestigen.

Das Versteifungselement wird, unter Berücksichtigung der vorstehend beschriebenen Aufgaben, die das Versteifungselement übernehmen soll, aus einem steifen Material mit einer definierten Biegeelastizität gebildet, so dass unter Einwirkung von Kräften die Kontur-Abmessungen des Luftverteilungsraums nicht wesentlich verändert werden, jedoch andererseits eine geringe Wölbung der Grundplatte möglich ist.

Die Dicke der Grundplatte des Versteifungselements wird im Bereich von 1 mm bis 3 mm, vorzugsweise im Bereich von 1 mm bis 2 mm, gewählt, so dass diese Grundplatte den Querschnitt des Luftverteilungsraums nicht wesentlich beeinträchtigt. Die gleichen Dickendimensionen gelten auch für die Halteteile, unabhängig davon, ob sie einstückig mit der Grundplatte ausgebildet sind oder an die Grundplatte angesetzt sind.

Das Versteifungselement wird zweckmäßigerweise aus einem Kunststoff mit im Wesentlichen elastischen Eigenschaften gefertigt.

Im Vergleich dazu wird die Trägerschicht bevorzugt aus einem Polyestermaterial oder aus einem vorgefestigten Polyestermaterial oder einem zusätzlich faserverstärkten Polyester Material oder einem Polyester-Biko-Material, vorzugsweise in FaserForm, aufgebaut. Weitere Materialien, die für das Versteifungselement vorgesehen sind, sind Materialien aus einem Thermoplast oder aus einem Duroplast oder einem Elastomer. Bei dem Polyester-Biko-Material handelt es sich um ein Material, das mittels Wärme und/oder mechanischer Druckbeaufschlagung verfestigt und in Form gebracht werden kann.

Wenn das vorstehend beschriebene Versteifungselement in dem Luftverteilungsraum zum Einsatz kommt, können der Trägerschicht und dem Versteifungselement spezifische Eigenschaften zugeordnet werden, die zum einen der Begrenzung des Luftverteilungsraums auf der Unterseite der Einlage und zum anderen der Aussteifung des Luftverteilungsraums zugeordnet sind. In Bezug auf das Versteifungselement sollte darauf geachtet werden, dass in dem Luftverteilungsraum zwischen der Trägerschicht und der durch die Oberseite der Einlage aufgespannten Ebene im Wesentlichen keine Aussteifungs- oder Beabstandungsteile verlaufen, die eine Luftströmung in dem Luftverteilungsraum beeinträchtigen können. Das bedeutet, dass der Luftverteilungsraum annähernd vollständig frei von solchen Aussteifungs- oder Beabstandungsteilen verbleibt.

Für einige Anwendungsfälle und Einbausituationen des Luftverteilungsmoduls werden in dem Versteifungselement und in der Trägerschicht auf der Unterseite der Einlage jeweils zueinander korrespondierende Luftzufuhröffnungen ausgebildet, um darüber in den Luftverteilungsraum Luft zuzuführen, gegebenenfalls auch um darüber Luft abzuführen.

Die Dicke der Trägerschicht liegt im Bereich von 0,5 mm, vorzugsweise von 1,0 mm bis 3,0 mm, mit der Maßgabe, dass diese Angaben um 20 % oder 30 % überschritten oder unterschritten werden können.

Weitere Einzelheiten und Merkmale der Erfindung ergeben sich aus der nachfolgenden Beschreibung von Ausführungsbeispielen anhand der Zeichnung. In der Zeichnung zeigt:
- Figur 1A: ein Luftverteilungsmodul einer Klimatisierungseinrichtung für einen Fahrzeugsitz gemäß der Erfindung in einer perspektivischen Ansicht,
- Figur 1B: eine Ansicht auf die Oberseite des Luftverteilungsmoduls der Figur 1A,
- Figur 2: eine weitere Ausführungsform eines Luftverteilungsmoduls in einer Ansicht entsprechend Figur 1B,
- Figur 3: das Luftverteilungsmodul in einer modifizierten Form,
- Figur 4: ein Luftverteilungsmodul entsprechend der Figur 3 in einer weiteren, modifizierten Ausführungsform,
- Figur 5: ein Luftverteilungsmodul vergleichbar mit demjenigen, das in den Figuren 1A und 1B dargestellt ist, bei dem der Luftverteilungsraum in drei Teilräume unterteilt ist,
- Figur 6: ein Luftverteilungsmodul, bei dem eine Luftzuführung von der Unterseite aus vorgesehen ist,
- Figur 7: eine Modifizierung des Luftverteilungsmoduls der Figur 6,
- Figur 8: ein Luftverteilungsmodul, das im Wesentlichen demjenigen entspricht, das in Figur 7 dargestellt ist,
- Figur 9: ein weiteres Luftverteilungsmodul mit einem zusätzlichen Versteifungselement, das in den Luftverteilungsraum eingelegt ist,
- Figur 10: das Versteifungselement der Figur 9 in einer perspektivischen Ansicht,
- Figur 11A und 11B: eine Belüftungseinheit mit einem Lüfter und einem speziellen Lüftergehäuse in einer Ansicht auf die Oberseite und einer Ansicht auf die Unterseite.

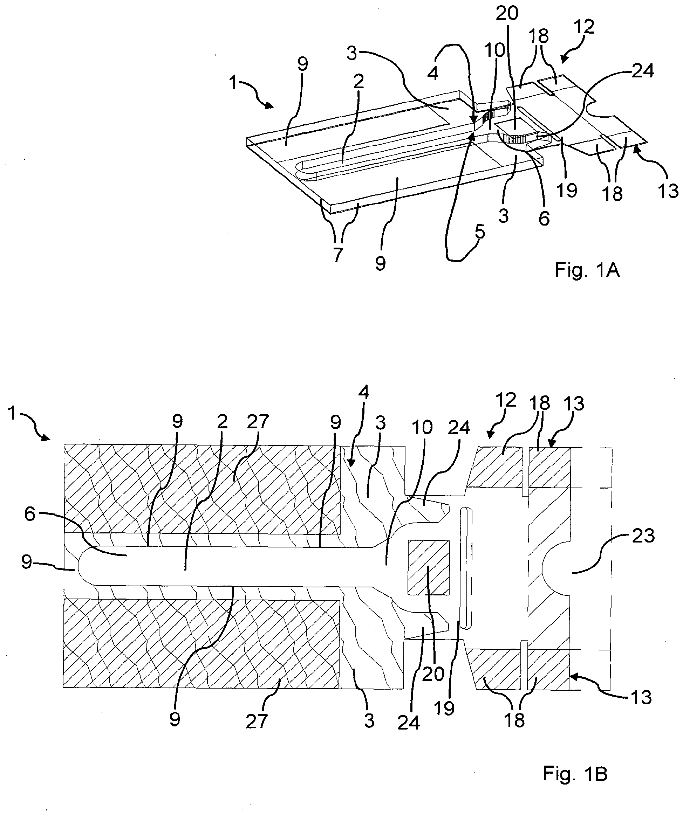

Das Luftverteilungsmodul für eine Klimatisierungseinrichtung eines Fahrzeugsitzes, das in einer perspektivischen Ansicht in der Figur 1A und in einer Draufsicht auf die Oberseite in Figur 1B dargestellt ist und das allgemein mit dem Bezugszeichen 1 bezeichnet ist, umfasst mindestens einen Luftverteilungsraum 2, der durch eine Einlage 3 im Wesentlichen umfangsmäßig begrenzt ist. Diese Einlage 3 besitzt eine Oberseite 4 und eine Unterseite 5. Die Einlage 3 hat eine gleichmäßige Dicke. Auf der Unterseite 5 der Einlage 3 ist der Luftverteilungsraum 2 durch eine Trägerschicht 6 begrenzt, während die Oberseite 4 der Einlage 3 nicht abgedeckt ist und folglich der Luftverteilungsraum 2 auf dieser Seite offen ist. Gerade dieser Aufbau des Luftverteilungsmoduls 1 stellt einen wichtigen Aspekt der Erfindung dar, da üblicherweise solche Luftverteilungsräume durch ein darin eingelegtes Abstandsmaterial versteift sind, das darüber hinaus auf allen Seiten durch eine luftundurchlässige Materialschicht umhüllt oder eingehüllt ist.

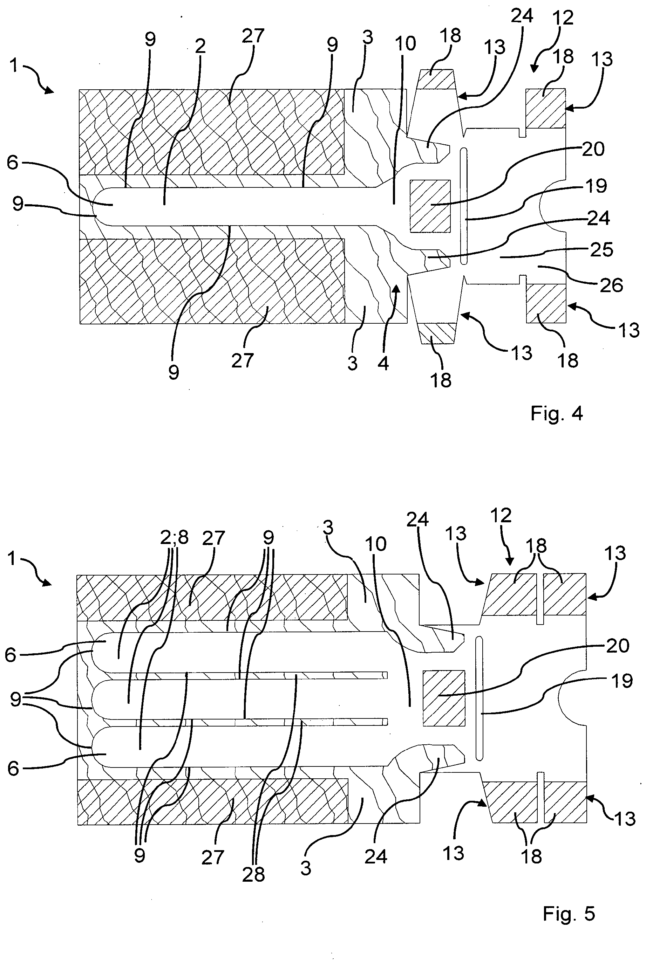

Ein solches Luftverteilungsmodul 1 ist besonders für eine Anordnung auf der B-Seite eines Sitzpolsters oder auf der B-Seite eines Rückenlehnenpolsters geeignet, d. h. auf derjenigen Seite des jeweiligen Polsters, die einer auf dem Sitz sitzenden Person abgewandt ist. Allerdings ist nicht ausgeschlossen, dass ein solches Luftverteilungsmodul 1 auch auf der der sitzenden Person zugewandten Seite des jeweiligen Sitz- oder Rückenlehnenpolsters angeordnet ist. In einem solchen Fall ist vorgesehen, dass der Luftverteilungsraum 2 nur eine geringe Breite im Vergleich zu dessen Länge aufweist, wie dies beispielsweise in der Ausführungsform der Figur 1A dargestellt ist, oder dass der Luftverteilungsraum 2 in mehrere, im Vergleich zu der Länge, schmale Teil-Luftverteilungsräume 8 unterteilt ist, wie dies in Figur 5 gezeigt ist.

Die Dicke der Einlage 3 zwischen deren Oberseite 4 und Unterseite 5 liegt bei 5 mm bis 30 mm, bevorzugter im Bereich von 10 mm bis 15 mm.

Der Luftverteilungsraum 2 ist vollständig frei belassen, das bedeutet, es sind in dem Luftverteilungsraum 2 keine Abstandsmaterialien eingesetzt, die in irgendeiner Weise die durch den Luftverteilungsraum 2 hindurch geführte Luftströmung behindern oder beeinträchtigen könnten. Von dieser Maßgabe sind solche Teile ausgenommen, die sich an die Seitenwände 9 der Einlage 3, die den Luftverteilungsraum 2 begrenzen, und/oder an die Bodenfläche, die durch die Trägerschicht 6 gebildet ist, flächig anlegen.

Die Einlage 3 kann aus einem Schaumstoffmaterial bestehen, vorzugsweise aus einem geschlossenporigen Schaumstoffmaterial, so dass die Einlage 3 im Wesentlichen luftundurchlässig ist, obwohl dies nicht unbedingt erforderlich ist, insbesondere dann nicht, wenn dieses Luftverteilungsmodul 1 in einer Ausnehmung eines Polsterkerns eingesetzt ist, derart, dass die Seitenkanten 7 der Einlage 3 innerhalb einer solchen Ausnehmung liegen. Die Einlage 3, oder Teile davon, könnten auch aus einem Faserverbundmaterial, aus einem Moosgummi, aus einem gepressten oder verdichteten Filz- oder filzartigem Material geformt werden, so dass die Einlage 3 zum einen im Wesentlichen formstabil ist und zum anderen eine solche Elastizität besitzt, dass sie sich einer in dem Sitzkissen vorhandenen Wölbung anpassen kann. Dies gilt besonders für den Fall, dass das Luftverteilungsmodul 1 in einer Ausnehmung eines Polsters eingesetzt wird, deren Bodenfläche eine leichte Krümmung oder Wölbung aufweist.

Wie anhand der Figuren 1A und 1B zu erkennen ist, hat die Einlage 3 eine rechteckige Außenkontur; die Form der Einlage 3, insbesondere deren Außenabmessungen, wird den Anforderungen, die an die Klimatisierung eines Fahrzeugsitzes gestellt werden, angepasst und kann somit auch andere geometrische Außenabmessungen aufweisen. In einem Teil der in den Figuren dargestellten Ausführungsformen des Luftverteilungsmoduls 1 ist die Einlage 3, die den Luftverteilungsraum 2 begrenzt, an einer Seite offen, so dass eine Unterbrechung 10 entsteht, über die Luft von einem in den Figuren 1A und 1B nicht dargestellten Lüfter in den Luftverteilungsraum 2 zugeführt wird.

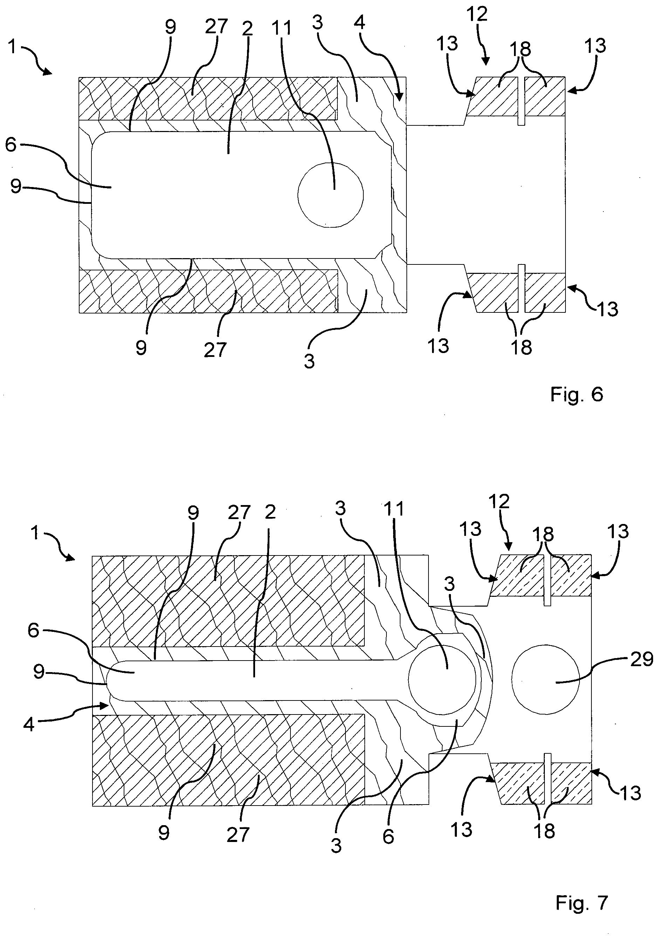

In anderen Ausführungsformen, wie sie beispielsweise in den Figuren 6 bis 8 dargestellt sind und nachfolgend noch erläutert werden, ist in der Trägerschicht 6, die auf der Unterseite 5 der Einlage 3 angeordnet ist, eine Öffnung 11 ausgebildet, die auf deren Innen- oder Außenseite mit einer axialen Luftzuführöffnung eines Lüfters für die Luftzu- oder -abführung verbunden wird.

Es sind auch Ausführungsformen des Luftverteilungsmoduls 1 vorgesehen, die sowohl eine Unterbrechung 10 im Bereich der Einlage 3 als auch eine Öffnung 11 in der Trägerschicht 6 für eine Luftzuführung aufweisen, wobei sowohl ein einzelner Lüfter mit einer entsprechenden Luftverteilungseinheit (Y-förmig) zur Verteilung von Luft zu der Unterbrechung 10 und zu der Öffnung 11 verwendet werden kann, als auch zwei Lüfter verwendet werden können.

Wenn die Öffnung 11 in der Trägerschicht 6 in dem Bereich der Trägerschicht 6 positioniert wird, der sich unterhalb der Unterbrechung 10 in der Einlage 3 befindet, kann über einen einzigen Lüfter Luft sowohl über die Unterbrechung 10 als auch über die Öffnung 11 in der Trägerschicht 6 in den Luftverteilungsraum 2 strömen.

In den jeweiligen in den Figuren dargestellten Ausführungsformen des Luftverteilungsmoduls 1 besitzt die Trägerschicht 6 mindestens einen Verlängerungsabschnitt 12. Dieser Verlängerungsabschnitt 12 kann in den verschiedenen in den Figuren dargestellten Ausführungsformen in der Draufsicht, als Zuschnitt zusammen mit der Trägerschicht 6 betrachtet, sehr unterschiedliche Formen haben. Allerdings sind die jeweiligen Verlängerungsabschnitte 12 durch das gemeinsame Merkmal gekennzeichnet, dass damit eine Befestigung eines Lüfters, eines Gehäuses eines Lüfters und/oder einer Lüfterhalterung eines Lüfters an dem Luftverteilungsmodul erfolgt.

Es ist aber darauf hinzuweisen, dass der Verlängerungsabschnitt 12 weitere Funktionen übernehmen kann, indem Flächenabschnitte des Verlängerungsabschnitts 12 zum Aussteifen oder zum teilweisen Abdichten des Luftverteilungsraums 2 oder von Teilflächen der Einlage 3 dienen können. Für die Funktion, den Lüfter und/oder ein Gehäuse eines Lüfters und/oder die Lüfterhalterung eines Lüfters an das Luftverteilungsmodul anzubinden, werden zumindest Flächenteile des Verlängerungsabschnitts 12 um den Lüfter und/oder ein Gehäuse eines Lüfters und/oder die Lüfterhalterung eines Lüfters herum diese teilweise umschließend positioniert. Auch wird zumindest ein Teil solcher Flächenteile mit der Oberseite 4 der Einlage 3 verbunden oder so geführt, dass sie an der Unterseite 5 der Einlage 3, und dort vorzugsweise an der Außenseite der Trägerschicht 6, befestigt werden können.

Grundsätzlich werden neben dem Verlängerungsabschnitt 12 keine weiteren Befestigungsmittel benötigt oder vorgesehen, um den Lüfter an dem Luftverteilungsmodul 1 zu halten. Sollten allerdings zusätzliche Befestigungsteile zum Einsatz kommen, die in den Figuren nicht dargestellt sind, so übernimmt dennoch der Verlängerungsabschnitt 12 zu mindestens 50 % oder mindestens 75 % dieser Funktion, obwohl bevorzugt keine weiteren wesentlichen Befestigungsteile zum Einsatz kommen.

Unter dem Begriff des Verlängerungsabschnitts 12 fallen alle Flächenteile, die an die Trägerschicht 6 ansetzen, wobei die Trägerschicht 6 derjenige Bereich ist, der dem Teil der Einlage 3 zugeordnet ist, der den Luftverteilungsraum 2 umschließt. Demzufolge kann der Verlängerungsabschnitt 12 in mehrere Flächenteile unterteilt werden, die sich in verschiedene Richtungen erstrecken und beispielsweise in Form von einer Lasche, oder mehreren Laschen, ausgeführt sind.

Solche Laschen, mit dem Bezugszeichen 13 bezeichnet, sind in der Ausführungsform der Figuren 1A und 1B an gegenüberliegenden Seiten ausgebildet, und zwar an den Seiten, die den langen Seiten der Außenkontur des rechteckigen Zuschnitts der Einlage 3 entsprechen.

Der Verlängerungsabschnitt 12 ist an seiner Ober- und/oder Unterseite mit mindestens einer Klebeschicht 18 versehen, mit der der jeweilige Verlängerungsabschnitt 12 oder die jeweilige Lasche 13 als Teil des Verlängerungsabschnitts 12 mit dem der der Einlage 3 zugeordnete Teil des Luftverteilungsmoduls 1 verbunden werden kann, um die Lüftereinheit 14 an dem Luftverteilungsmoduls 1 zu befestigen.

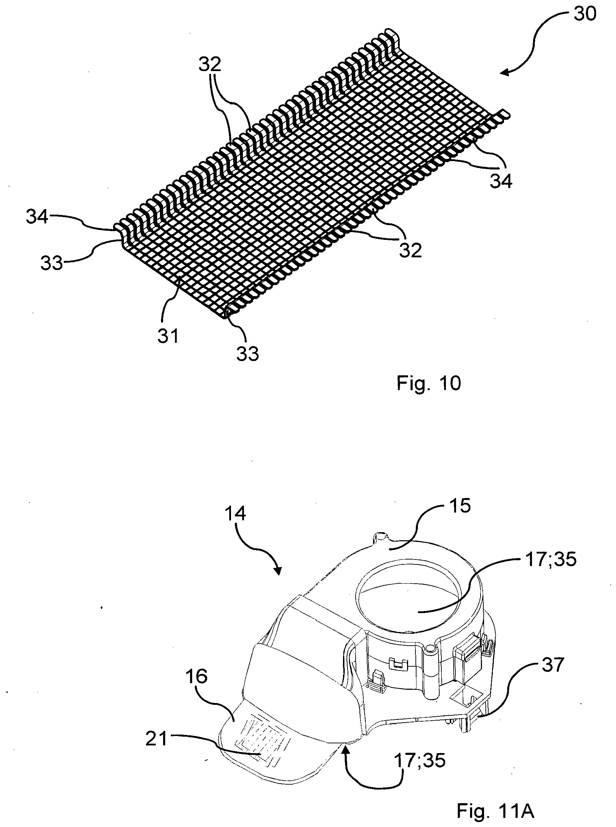

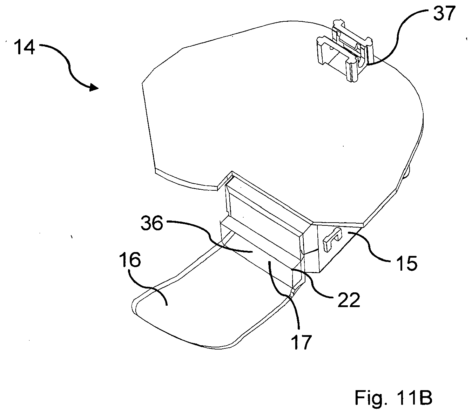

In den Figuren 11A und 11B ist ein Lüfter bzw. eine Lüftereinheit 14 als Beispiel gezeigt, der bzw. die besonders geeignet ist, um sie mit dem Luftverteilungsmodul 1, wie es in den Figuren 1A und 1B gezeigt ist, zu verbinden. Als Besonderheit besitzt die Lüftereinheit 14 in den Figuren 11A und 11B eine von dem Gehäuse 15 vorstehende, im Wesentlichen formstabile Zunge 16, die an dem Teil des Gehäuses 15 ansetzt, an dem sich eine Luftaustrittsöffnung 17 befindet.

Bei der Lüftereinheit 14, die in den Figuren 11A und 11B gezeigt ist, handelt es sich vorzugsweise um einen Radiallüfter, der die Luft axial in das Lüftergehäuse 15 ansaugt und die Luft radial über die Luftaustrittsöffnung 17 abgibt. Es könnte jedoch auch ein Axiallüfter verwendet werden, in dem das Lüftergehäuse 15 so umgestaltet wird, dass auch bei einem solchen Axiallüfter **eine entsprechende** Zunge im Wesentlichen an eine Luftaustrittsöffnung 17 anschließt und die sich an die Innenseite des den Luftverteilungsraum begrenzenden Teils der Trägerschicht im Wesentlichen flächig anlegt.

Um die Lüftereinheit 14 mit dem Luftverteilungsmodul 1, das in den Figuren 1A und 1B gezeigt ist, zu verbinden, ist in der Trägerschicht 6, und zwar im Übergangsbereich zu dem Verlängerungsabschnitt 12, ein Schlitz 19 vorhanden. Dieser Schlitz 19 ist folglich in dem Bereich angeordnet, in dem sich die die Luftzuführöffnung bildende Unterbrechung 10 der Einlage 3 befindet. In Bezug auf eine gedachte Längsachse des Luftverteilungsraums 2 verläuft der Schlitz 19 im Wesentlichen im rechten Winkel dazu.

In diesen Schlitz 19 wird die Lüftereinheit 14 der Figur 11A oder Figur 11B mit der formstabilen Zunge 16, die von dem Gehäuse 15 vorsteht, von der Unterseite aus eingesteckt, so dass diese Zunge 16 in den Darstellungen der Figuren 1A und 1B durch den Schlitz 19 nach oben vorsteht.

Wie anhand der Figuren zu erkennen ist, ist der Schlitz 19 und folglich entsprechend die formstabile Zunge 16 dort positioniert, wo an der Trägerschicht 6 der Verlängerungsabschnitt 12 ansetzt.

Die Zunge 16 erstreckt sich entlang der Innenseite der Trägerschicht 6 in Richtung des Luftverteilungsraums 2, so dass sie in diesem Bereich zwischen der Trägerschicht 6 und der Unterseite 5 der Einlage 3 eingefügt ist. Zwischen dem Schlitz 19 und der Unterbrechung 10 der Einlage 3, über die die Luft in den Luftverteilungsraum 2 zugeführt wird, befindet sich auf der Innenseite der Trägerschicht 6 eine Klebefläche 20, mittels der die Zunge 16 an der Trägerschicht 6 verklebt wird. Die Position dieser Klebefläche 20 ist in Figur 11A mit einer doppelt schraffierten Fläche 21 angedeutet, die sich in der Darstellung der Figur 11B an der nicht sichtbaren Unterseite der Zunge 16 befindet. Als Klebefläche 20 könnte ein doppelseitiges Klebeband oder elastisches Klebe-Pad zum Einsatz kommen. Auch ein Klettverschluss (Velcro-Verschluss) ist für eine solche Verbindung vorgesehen. Es ist darauf hinzuweisen, dass die Klebefläche 20 auch an der Unterseite der Zunge 16, anstelle einer Anordnung auf der Innenseite der Trägerschicht 6, oder auch an beiden Teilen, angeordnet werden kann.

Nachdem die Zunge 16 vollständig von außen bzw. der Unterseite des Verlängerungsabschnitts 12 in den Schlitz 19 eingefügt ist, wird der Schlitz 19 so gedehnt, wie dies in Figur 1B in unterbrochener Linie angedeutet ist, dass er über den Querschnitt der Luftaustrittsöffnung 17 an dem Lüftergehäuse 15 gestülpt werden kann. Vorzugsweise besitzt die Luftaustrittsöffnung 17 an dem Lüftergehäuse, um deren Rand herum, einen Wulst 22, der verhindert, dass sich das Lüftergehäuse 15 von dem Schlitz 19 löst, indem sich der gedehnte Schlitz 19 hinter dem Wulst 22 wieder zusammenzieht.

Nachdem das Lüftergehäuse 15 mit der Zunge 16 so positioniert ist, wie dies vorstehend beschrieben ist, wird der Verlängerungsabschnitt 12 auf die Oberseite 4 der Einlage 3 umgelegt und die jeweiligen inneren Laschen 13 an den gegenüber liegenden Seiten des Verlängerungsabschnitts 12 werden entweder an der Oberseite der Einlage 3 über die Klebeschichten 18 an den Enden der Laschen 13 verklebt oder sie werden um die Seitenflächen der Einlage 3 herum gelegt und an der Unterseite der Einlage 3 verklebt. Für den letzteren Fall ist die Einlage 3 an dem Ende, das im Bereich des Schlitzes 19 liegt, von einer geringeren Breite. Allerdings könnten diese Laschen 13 länger ausgeführt werden als dies in Figur 1B dargestellt ist, so dass sie auch bei voller Breite der Einlage 3 um die Außenseiten herum und gegebenenfalls bis zu der Unterseite der Einlage 3 geführt werden können.

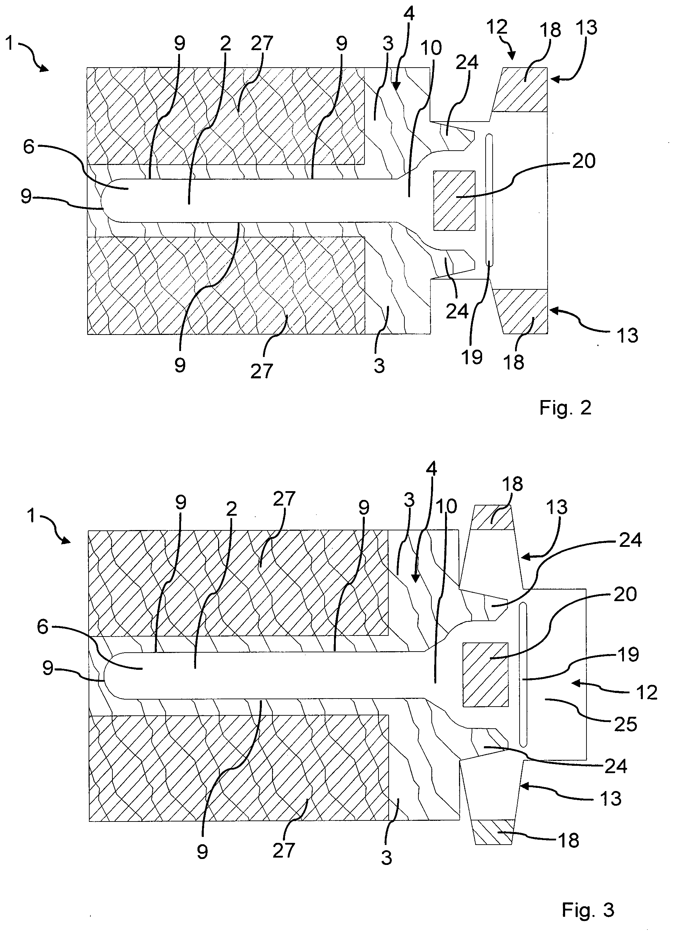

Während der Verlängerungsabschnitt 12, wie er in den Figuren 1A und 1B dargestellt ist, auf seinen beiden gegenüber liegenden Seitenkanten jeweils zwei dieser Laschen 13 aufweist, ist in einer anderen Ausführungsform, wie sie beispielsweise in Figur 2 dargestellt ist, der Verlängerungsabschnitt 12 auf jeder Seite mit nur einer einzigen Lasche 13 versehen. Im Gegensatz zu dieser Ausführungsform der Figur 2 haben die doppelten Laschen 13 des Verlängerungsabschnitts 12 den Vorteil einer größeren Flexibilität, um den Verlängerungsabschnitt 12 an der Einlage 3 oder an Teilen des Lüfters und/oder des Lüftergehäuses und/oder der Lüfterhalterung zu verbinden.

Es ist auch vorgesehen, auf der jeweiligen Seite des Verlängerungsabschnitts 12 die eine der beiden dieser Seite zugeordneten Laschen 13 länger auszuführen als die andere Lasche 13, so dass dann die längere Lasche 13 (nicht in Figur 1A und 1B dargestellt), wenn der Verlängerungsabschnitt 12 auf der Oberseite der Einlage 3 aufliegt, um die Außenkanten der Einlage 3 herum zu deren Unterseite und dort auf die Außenfläche der Trägerschicht 6 geführt wird, um die Lasche 13 mit deren Klebeschicht bzw. Klebefläche 18 an der Außenseite der Trägerschicht 6 zu verkleben.

In einer weiteren Ausführungsform kann der Teil des Verlängerungsabschnitts 12, der das freie Ende des Verlängerungsabschnitts 12 bildet, der in unterbrochener Linie angedeutet ist und mit dem Bezugszeichen 23 bezeichnet ist, dann, wenn der an den Schlitz 19 angrenzende Teil des Verlängerungsabschnitts 12 auf der Oberseite 4 der Einlage 3 aufliegt, auf sich selbst zurückgefaltet werden, um dann dessen Laschen 13 an dem Lüftergehäuse 15 zu befestigen. Es ist verständlich, dass in diesem Fall die entsprechende Klebeschicht 18, ausgehend von der Darstellung der Figur 1B, auf der Unterseite der Laschen 13 aufgebracht ist. Auch können in diesem Fall die Laschen 13 länger ausgeführt werden als dies in Figur 1B gezeigt ist, um beispielsweise die Laschen 13 um das Lüftergehäuse 15 herum zu führen.

Es sollte erwähnt werden, dass sich der Luftverteilungsraum 2 in der Einlage 3 in dem Bereich, in dem die Einlage 3 die Unterbrechung 10 für die Zuführung von Luft aufweist, in der Breite erweitert, insbesondere trichterförmig erweitert, werden kann, indem die Einlage 3 Verlängerungsteile in der Art von Fortsätzen 24 aufweist, um die Luft eines Lüfters, die im Bereich des Schlitzes 19 in das Luftverteilungsmodul 1 eintritt, auf den Querschnitt des Luftverteilungsraums 2 zu kanalisieren.

Während sich der Luftverteilungsraum 2 an seinem offenen Ende durch die Fortsätze 24 trichterförmig erweitert, kann sich das offene Ende des Luftverteilungsraums 2 auch trichterförmig zu dem Schlitz 19 hin verengen, wie dies beispielsweise die Ausführungsform der Figur 5 zeigt, und zwar dann, wenn der Luftverteilungsraum 2 eine Breite aufweist, die größer ist als der Bereich, der zur Verfügung steht, um Luft an dem offenen Ende 10 des Luftverteilungsraums 2 zuzuführen.

Es ist ausdrücklich darauf hinzuweisen, dass in der nachfolgenden Beschreibung der verschiedenen Ausführungsbeispiele, wie sie in den Figuren 1 bis 11B dargestellt sind, nicht alle Bauteile erneut zu einer Ausführungsform beschrieben werden, wenn sie anhand einer anderen Ausführungsform bereits beschrieben oder erläutert wurden. Entsprechend kann die Beschreibung der verschiedenen Bauteile zu einer Ausführungsform auf die jeweiligen Bauteile einer anderen Ausführungsform übertragen werden, ohne dass dies ausdrücklich erwähnt ist.

Auch ist darauf hinzuweisen, dass Strömungsrichtungen, soweit sie erwähnt sind, auch umgekehrt werden können, so dass beispielsweise ein Lüfter oder eine Lüftereinheit, die Luft in den Luftverteilungsraum zuführt, auch Luft aus dem Luftverteilungsraum absaugen könnte.

Die Figur 2 zeigt eine weitere Ausführungsform eines Luftverteilungsmoduls in einer Ansicht entsprechend der Figur 1B. Im Vergleich zu der Figur 1B weist der Verlängerungsabschnitt 12 an seinen beiden gegenüber liegenden Seiten jeweils nur eine einzelne Lasche 13 auf. Die Lüftereinheit 14 wird in derselben Art und Weise an diesem Luftverteilungsmodul 1 befestigt, wie dies zuvor anhand der Figur 1B beschrieben ist.

In den Ausführungsformen der Figuren 1 und 2 sind die Laschen 13 in Bezug auf den Schlitz 19 so positioniert, dass sie sich auf der Seite des Schlitzes 19 befinden, der, in der Draufsicht auf die Trägerschicht 6 und den sich daran ansetzenden Verlängerungsabschnitt 12, und zwar im Zuschnitt gesehen, auf der Seite befindet, die dem Luftverteilungsraum 2 gegenüber liegt.

Es kann auch zweckmäßig sein, eine Lüftereinheit einzusetzen, bei der die Luftaustrittsöffnung direkt an die Unterbrechung 10 der Einlage 3 angesetzt wird und der Verlängerungsabschnitt 12, und gegebenenfalls dessen Laschenabschnitte 13, um den Lüfter bzw. dessen Lüftergehäuse bzw. einer Lüfterhalterung herumgelegt wird, um so die entsprechende Einheit, die Luft in den Luftverteilungsraum 2 zuführt, mit dem Luftverteilungsmodul 1 zu verbinden. In einem solchen Fall ist der Schlitz 19 in dem Übergangsbereich zwischen Trägerschicht 6 und Verlängerungsabschnitt 12 nicht erforderlich.

Eine modifizierte Form des Luftverteilungsmodul 1, wie es in Figur 2 dargestellt ist, ist in Figur 3 gezeigt. Gegenüber dem Aufbau der Figur 2 sind die Laschen 13 an den beiden gegenüber liegenden Seiten des Verlängerungsabschnitts 12, in Bezug auf die Lage des Schlitzes 19, auf der Seite angeordnet, die dem Luftverteilungsraum 10 zugeordnet ist. Auf der gegenüber liegenden Seite des Schlitzes 19 befindet sich ein Flächenteil 25, das an den Seiten keine Laschen aufweist. Um bei dieser Ausführungsform des Luftverteilungsmoduls 1 den Lüfter 14, 15 zu befestigen, wird dessen Zunge 16 wiederum durch den Schlitz 19 geschoben, dann wird das Flächenteil 25 auf die Oberseite 4 der Einlage 3 bzw. auf die Oberseite der Fortsätze 24 der Einlage 3 aufgelegt, gegebenenfalls auch daran verklebt, um dann anschließend die beiden Laschen 13 mittels deren Klebeflächen 18 an der Oberseite des Flächenteils 25 zu verkleben. Wenn es zweckmäßig ist, können auch zunächst die Laschen 13 auf die Oberseite 4 der Einlage 3 aufgelegt werden, und dann wird das Flächenteil 25 auf die Außenseite der Laschen 13 umgelegt und gegebenenfalls daran verklebt.

Das Luftverteilungsmodul 1, wie es in Figur 4 dargestellt ist, baut auf dem Luftverteilungsmodul 1 der Figur 3 auf, das vorstehend beschrieben ist. In Figur 4 ist an das Ende des Flächenteils 25 ein Endabschnitt 26 angesetzt, der auf seinen beiden gegenüber liegenden Seiten jeweils eine Lasche 13 mit Klebeflächen 18 besitzt. Wenn das Flächenteil 25 mit dem Endabschnitt 26 auf die Oberseite 4 der Einlage 3 umgelegt ist, dienen die zusätzlichen Laschen 13 an dem Endabschnitt 26 dazu, den Verlängerungsabschnitt 12 mit den Klebeschichten 18 zusätzlich auf der Oberseite 4 der Einlage 3 zu befestigen.

In den verschiedenen Ausführungsformen, die in den Figuren gezeigt sind, sind auf der Oberseite 4 der Einlage 3 Klebebereiche 27 vorhanden, die in bestimmten Anwendungsfällen, dazu dienen, das Luftverteilungsmodul 1 an einer Fläche des Sitzes, vorzugsweise an dem Polsterteil des Sitzes und dort in einer entsprechenden Ausnehmung des Sitzes, zu befestigen. Diese Klebebereiche 27 decken den überwiegenden Teil der Oberfläche 4 der Einlage 3 ab. Sie können aus einem doppelseitigen Klebeband, einer auf die Oberfläche 4 der Einlage 3 aufgetragenen Klebeschicht, die vorzugsweise aufgesprüht wird, und die vorzugsweise selbstklebend sind, bestehen.

Die Figur 5 zeigt ein Luftverteilungsmodul, das mit demjenigen, das in den Figuren 1A und 1B dargestellt ist, vergleichbar ist. Im Gegensatz zu der Ausführungsform der Figuren 1A und 1B ist der Luftverteilungsraum 2 in drei Teilräume 8 unterteilt, die jeweils mit dem Bezugszeichen 8 bezeichnet sind. Diese drei Teilräume sind durch schmale Stege 28, die Teil der Einlage 3 sind, voneinander getrennt, stehen allerdings strömungstechnisch an ihrem einen Ende, das im Bereich der Unterbrechung 10 der Einlage 3, über die Luft in den Luftverteilungsraum 2 zugeführt wird, liegt, in Verbindung. Da die Breite der drei Teilräume des Luftverteilungsraums 2 wesentlich größer ist als die dazu zugeordnete und benötigte Luftzuführöffnung sind die Fortsätze 24 als Teil der Einlage 3 so orientiert, dass sie den Querschnitt des Luftverteilungsraums 2 trichterförmig verengen, während in den zuvor beschriebenen Ausführungsformen diese Fortsätze 24 den Luftverteilungsraum 2 trichterförmig erweitern.

Die Ausführungsformen des Luftverteilungsmoduls 1, die in den Figuren 6 bis 8 dargestellt sind, unterscheiden sich von den zuvor beschriebenen Ausführungsformen dadurch, dass die Luftzuführung zu dem Luftverteilungsraum 2 über eine Öffnung 11 in der Trägerschicht 6 und damit von der Unterseite 5 der Einlage 3 aus erfolgt.

Die Öffnung 11 in der Trägerschicht 6 kann in einem geeigneten Bereich in Bezug auf den Luftverteilungsraum 2 angeordnet werden. Es ist jedoch bevorzugt, dass die Öffnung 11 an derjenigen Seite des Luftverteilungsraums 2 angeordnet ist, an der sich der Verlängerungsabschnitt 12 der Trägerschicht 6 anschließt.

Für eine Luftzuführung wird ein Lüfter an der Unterseite des Luftverteilungsmoduls 1 so positioniert, dass sein Gehäuse zumindest im Bereich der radialen Auslassöffnung in den Luftverteilungsraum 2 hinein ragt, während der Teil des Gehäuses, über den die Luft angesaugt wird, auf der Unterseite der Trägerschicht positioniert ist. Der Verlängerungsabschnitt 12 wird zur Oberseite 4 der Einlage 3 umgelegt und dort an der Oberseite 4 befestigt, so dass der Lüfter abgedeckt ist, obwohl dies nicht unbedingt erforderlich ist. Zusätzlich kann der Verlängerungsabschnitt 12 nicht dargestellte Klebeflächen aufweisen, die sich mit der Oberseite 4 des Lüftergehäuses, die in den Luftverteilungsraum 2 vorsteht, verbinden, so dass der Verlängerungsabschnitt 12 auf sich selbst zurückgeklappt/gelegt werden kann.

Die Figur 7, die in Bezug auf den Aufbau des Verlängerungsabschnitts 12 mit den Laschen 13 der Figur 5 entspricht, ist dahingehend modifiziert, dass die Luft in den Luftverteilungsraum 2 über einen Lüfter zugeführt wird, dessen Gehäuse zumindest teilweise in der Öffnung 11 aufgenommen ist, wie dies zuvor anhand der Figur 6 beschrieben ist. Allerdings ist eine weitere Öffnung 29 in dem Verlängerungsabschnitt 12 ausgebildet, die zu der Öffnung 11 korrespondiert, wenn der Verlängerungsabschnitt 12 auf die Oberseite 4 der Einlage 3 umgelegt ist. Diese Ausführungsform ist für einen Lüfter geeignet, der in die Öffnung 11 so eingesetzt ist, dass er Luft radial in den Luftverteilungsraum 2 abgibt, allerdings diese Luft axial aus Richtung der Oberseite 4 der Einlage 3 ansaugt. Die Öffnung 29 des Verlängerungsabschnitts 12 muss nicht exakt der Öffnung 11 in der Trägerschicht 6 angepasst sein. Die Größe der Öffnung 29 richtet sich nach der Größe des Ansaugbereichs in dem Gehäuse der Lüftereinheit.

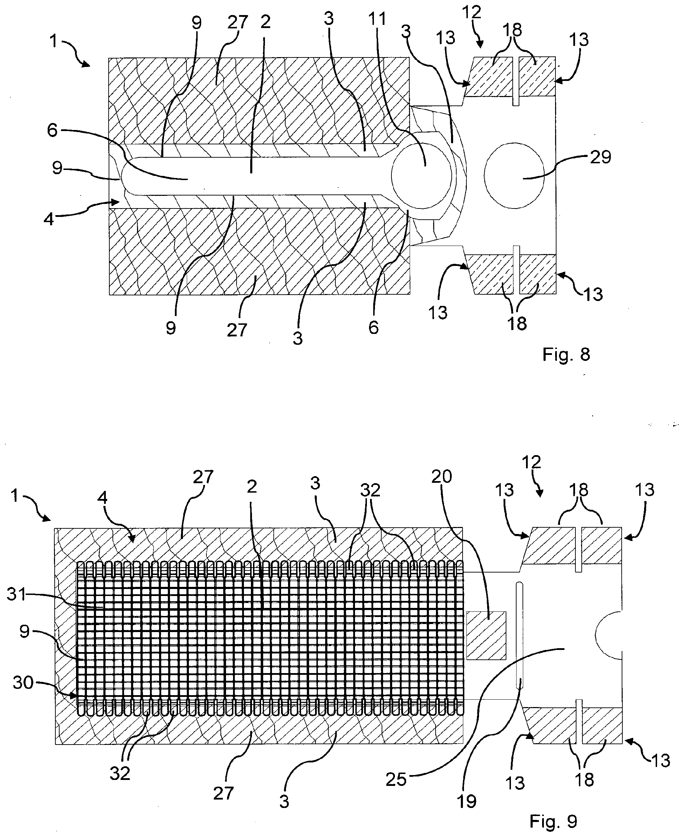

Das Luftverteilungsmodul 1, das in Figur 8 dargestellt ist, entspricht in seinem wesentlichen Aufbau demjenigen, das in Figur 7 dargestellt ist. Die Ausführungsform der Figur 8 zeigt, dass die Größen der Klebereiche 27 auf der Oberseite 4 der Einlage 3 variieren können. Eine solche Klebefläche 27 auf der Oberseite 4 der Einlage 3 kann, wie ein Vergleich der Figur 7 mit der Figur 8 zeigt, dort entfallen, wo die Klebeschichten 18 an den Laschen 13 vorhanden sind, die sich mit der Oberseite 4 der Einlage 3 verbinden.

Figur 9 zeigt ein weiteres Luftverteilungsmodul 1, bei dem in den Luftverteilungsraum 2 ein zusätzliches Versteifungselement 30 eingelegt ist. Dieses Versteifungselement 30 ist in einer perspektivischen Ansicht auch in Figur 10 gezeigt.

Ein solches Versteifungselement 30 besitzt eine Grundplatte 31 mit Halteteilen 32, die an zwei gegenüberliegenden Seiten der Grundplatte 31 ansetzen. Diese Halteteile 32 besitzen zwei Schenkelabschnitte, wobei sich der eine erste Schenkelabschnitt 33 in Bezug auf die Ebene der Grundplatte 31 senkrecht nach oben erstreckt, während sich der andere zweite Schenkelabschnitt 34 an dem Ende des ersten Schenkelabschnitts 33 vertikal bzw. senkrecht zu dem ersten Schenkelabschnitt 33 nach außen erstreckt. Die Grundplatte 31 des Versteifungselements 30 ist so dargestellt, dass sie eine Struktur aufweist. Eine solche Struktur ist jedoch nicht erforderlich und dient im Wesentlichen nur zur besseren Darstellung. Bevorzugt ist eine glatte und ebene Platte.

Als Besonderheit sind die Halteteile 32 anzusehen, insbesondere deren Form. Es ist zu erwähnen, dass die Halteteile 32, wie sie an die Ränder der Grundplatte 31 des Versteifungselements 30 angesetzt sind, voneinander getrennt sind, wie dies deutlicher in Figur 9 zu erkennen ist. Diese Halteteile 32 mit einer L-Form der beiden Schenkelabschnitte 33 und 34 sind folglich voneinander entkoppelt, so dass sie sich den jeweiligen Gegebenheiten anpassen können. Es ist aber auch vorgesehen, dass die Schenkelabschnitte 33 und 34 aus zusammenhängenden Flächenteilen gebildet sind.

Dieses Versteifungselement 30 dient dazu, den Innenraum, das bedeutet den Luftverteilungsraum 2 der Einlage 3, auszusteifen. Hierzu wird die Grundplatte 31 so in den Luftverteilungsraum 2 eingesetzt, dass sie auf der Innenseite der Trägerschicht 6, die den Luftverteilungsraum 2 auf dessen Unterseite begrenzt, flächig aufliegt. Dadurch wird eine stabile Bodenfläche in dem Luftverteilungsraum 2 erhalten, so dass sich der Luftverteilungsraum 2, wenn auf diesen äußere Kräfte, beispielsweise über das Sitzpolster, ausgeübt werden, nicht zusammendrückt oder in irgendeiner Weise kollabiert. Andererseits beeinträchtigt dieses Versteifungselement 30 nicht wesentlich den Querschnitt des Luftverteilungsraums, zumal die Grundplatte 31 des Versteifungselements 30 sehr dünn ausgeführt werden kann, vorzugsweise in einer Stärke von 0,5 mm bis 2 mm, bevorzugter von 0,5 mm bis 1,5 mm, und noch bevorzugter im Bereich von etwa 1 mm.

Wenn das Versteifungselement 30 zumindest an den beiden gegenüber liegenden Seiten, aber auch dann, wenn die beiden anderen Seiten, mit den Halteteilen 32 versehen ist, wird die Grundplatte 31 zusätzlich am Rand der den Luftverteilungsraum 2 begrenzenden Einlage 3 abgestützt, indem sich die vertikal verlaufenden ersten Halteabschnitte 33 an den inneren Seitenwänden der Einlage 3 abstützen und sich die anderen, zweiten Schenkelabschnitte 34 auf die Oberseite 4 der Einlage 3 in deren Randbereich auflegen und/oder abstützen:

Während in den Figuren 9 und 10 die Halteteile 32 einstückig mit der Grundplatte 31 des Versteifungselements 30 verbunden sind, können diese auch als separate Teile an die Grundplatte 31 angesetzt werden.

Die Halteteile 32 sollten, wenn sie in der Form von zungenartigen Teilen unterteilt sind, wie dies in den Figuren dargestellt ist, im Wesentlichen fortlaufend aneinander gereiht und unabhängig voneinander bewegbar sein. Die Breite der zungenartigen Halteteile 32 sollte im Bereich von 3 mm bis 10 mm liegen, vorzugsweise im Bereich von etwa 5 mm, und benachbarte Halteteile 32 sollten voneinander durch einen Schlitz getrennt sein, der nicht breiter als maximal 1 mm beträgt, obwohl der Schlitz auch eine Breite von 0,5 mm bis 2 mm haben kann. Auch ist vorgesehen, dass in einer Ausführungsform des Versteifungselements 30, wie es in den Figuren 9 und 10 dargestellt ist, jedes zweite Halteteil 32 weggelassen ist, so dass benachbarte Halteteile 32 zueinander, unter Berücksichtigung der vorstehend angegebenen Größenordnung der Halteteile 32, etwa 5 mm bis 10 mm voneinander beabstandet sind.

Das Versteifungselement 30 kann an dem Ende, an dem sich die Luftzufuhröffnung für die Luftzufuhr einer Lüftereinheit befindet, d.h. in dem Bereich, in dem auch die Einlage 3 unterbrochen ist, als rohrförmiger Kanal zur Aufnahme des Lüfters oder des Lüftergehäuses oder der Lüfterhalterung ausgebildet sein. Hierdurch wird, entsprechend der Zunge 16 der Lüftereinheit, die in Figur 11 und 12 dargestellt ist und vorstehend bereits beschrieben ist, eine stabile Basis für den Lüfter 14 erhalten.

Falls ein Lüfter 14 Luft in den Luftverteilungsraum 2 über eine Öffnung 11 in der Trägerschicht 6 zuführen soll, wie dies vorstehend anhand der Figuren 6 bis 8 dargestellt und beschrieben ist, kann die Grundplatte 31 des Versteifungselements 30 mit einer entsprechenden zu der Öffnung 11 in der Trägerschicht 6 korrespondierenden Öffnung versehen werden.

Wie bereits erwähnt, wird das Versteifungselement 30 aus einem steifen Material mit einer definierten Biegeelastizität gebildet. Die Biegeelastizität soll gewährleisten, dass, unter Einwirkung von Kräften, die Kontur-Abmessungen des Luftverteilungsraums 2 nicht wesentlich verändert werden, aber dennoch eine geringe Wölbung der Grundplatte 31 möglich ist, so dass sich das Luftverteilungsmodul 1 insbesondere im Bereich dessen Luftverteilungsraums 2 einer geringen Verformung eines Sitzpolsters, in das das Luftverteilungsmodul 1 eingesetzt ist, oder sich daran anlegt, folgen kann, so dass es für einen Benutzer des Sitzes in keiner Weise spürbar ist.

Als Material für das Versteifungselement 30 sollte ein Kunststoff mit zumindest teilweise elastischen Eigenschaften verwendet werden. Die Materialdicke für das Versteifungselement 30 liegt im Bereich von 0,3 mm bis 10 mm, bevorzugt im Bereich von 0,5 mm bis 5 mm, besonders bevorzugt im Bereich von 1 mm bis 3 mm oder 1 mm bis 1,5 mm. In jedem Fall sollte die Dicke des Versteifungselements 30 gering gehalten werden.

Die Lüftereinheit 14, wie sie in den Figuren 11 und 12 dargestellt ist, dient im Wesentlichen dazu, die formstabile Zunge 16 zu erläutern, die in den verschiedenen Ausführungsformen dazu dient, durch den Schlitz 19 in der Trägerschicht 6 hindurchzuführen und die sich an die Innenseite der Trägerschicht 6 anlegt.

Bei dieser Lüftereinheit 14 handelt es sich um einen Lüfter, der die Luft axial über eine Lüfteröffnung 35 ansaugt und diese Luft radial über eine weitere Lüfteröffnung 36 im Bereich der formstabilen Zunge 16 abgibt. Das Lüftergehäuse besitzt auf einer Seite ein Klemm- oder Befestigungsteil 37, mit dem es beispielsweise an einer Sitzstruktur befestigt werden kann. Bevorzugt wird das Lüftergehäuse zumindest teilweise in einen Polsterkern auf der B-Seite eines Sitzpolsters eingesetzt.

## Patentansprüche

1. Klimatisierungseinrichtung für einen Fahrzeugsitz mit mindestens einem Luftverteilungsmodul (1), das mindestens einen Luftverteilungsraum (2) aufweist, wobei der Luftverteilungsraum (2) zumindest an einem Teil seines Außenumfangs durch eine Einlage (3), die eine Oberseite (4) und eine Unterseite (5) aufweist, begrenzt ist, wobei der Luftverteilungsraum (2) auf der Seite, die der Unterseite (5) der Einlage (3) zugeordnet ist, durch eine Trägerschicht (6) begrenzt ist, die mit der Unterseite (5) der Einlage (3) zumindest über eine Teilfläche verbunden ist, und wobei eine Luftzuführöffnung zum Zuführen von Luft in den Luftverteilungsraum (2) zumindest teilweise über eine Unterbrechung (10) der Einlage (3) und/oder über eine Öffnung (11) in der Trägerschicht erfolgt, **dadurch gekennzeichnet, dass** der Luftverteilungsraum (2) auf der der Trägerschicht (6) gegenüberliegenden Oberseite (4) offen ist und dass die Trägerschicht (6) mindestens einen Verlängerungsabschnitt (12), der über den Teil der Trägerschicht vorsteht, der nicht durch die Unterseite der Einlage abgedeckt ist, für eine Befestigung eines Lüfters, eines Gehäuses eines Lüfters oder einer Lüfterhalterung eines Lüfters an dem Luftverteilungsmodul (1) aufweist, indem zumindest Flächenteile des Verlängerungsabschnitts (12) den Lüfter und/oder ein Gehäuse eines Lüfters und/oder die Lüfterhalterung eines Lüfters zumindest teilweise umschließen, wobei der Verlängerungsabschnitt (12), oder eine jeweilige Lasche (13) als Teil des Verlängerungsabschnitts (12), an seiner Ober- und/oder Unterseite mit mindestens einer Klebeschicht (18) versehen ist.

2. Klimatisierungseinrichtung nach Anspruch 1 **dadurch gekennzeichnet, dass** der Verlängerungsabschnitt (12) einstückig mit der Trägerschicht (6) ausgebildet ist.

3. Klimatisierungseinrichtung nach Anspruch 1, **dadurch gekennzeichnet, dass** der Verlängerungsabschnitt (12) an die Trägerschicht (6) angesetzt ist.

4. Klimatisierungseinrichtung nach einem der Ansprüche 1 bis 3, **dadurch gekennzeichnet, dass** die Trägerschicht (6) im Wesentlichen für Luft undurchlässig ist.

5. Klimatisierungseinrichtung nach Anspruch 4, **dadurch gekennzeichnet, dass** die Trägerschicht (6) ein Polyestermaterial (Vlies) ist, das auf zumindest einer Seitenfläche angeschmolzen und/oder im Wesentlichen für Luft undurchlässig verdichtet ist.

6. Klimatisierungseinrichtung nach einem der Ansprüche 1 bis 5, **dadurch gekennzeichnet, dass** die Trägerschicht (6) im Übergangsbereich zu dem Verlängerungsabschnitt (12) einen Schlitz (19) aufweist, der im Bereich der eine Luftzuführöffnung bildenden Unterbrechung der Einlage (3) dort positioniert ist, wo der Verlängerungsabschnitt (12) der Trägerschicht (6) ansetzt, und dass der Verlängerungsabschnitt (12) in diesem Bereich auf die Oberseite (4) der Einlage (3) umgelegt ist und an der Oberseite (4) der Einlage (3) befestigt ist.

7. Klimatisierungseinrichtung nach Anspruch 6, **dadurch gekennzeichnet, dass** der Verlängerungsabschnitt (12) an mindestens einer freien Seite, die nicht zu der Seite gegenüberliegt, an der der Verlängerungsabschnitt (12) auf die Oberseite (4) der Einlage (3) umgelegt ist, mindestens eine Lasche oder einen Laschenabschnitt (13) aufweist.

8. Klimatisierungseinrichtung nach Anspruch 7, **dadurch gekennzeichnet, dass** der Verlängerungsabschnitt (12) mindestens jeweils eine Lasche oder einen Laschenabschnitt (13) an zwei gegenüberliegenden Seiten aufweist, die jeweils zumindest mit ihren freien Enden (23) auf der Oberseite (4) der Einlage (3) befestigt sind.

9. Klimatisierungseinrichtung nach Anspruch 8, **dadurch gekennzeichnet, dass** der Verlängerungsabschnitt (12) mindestens jeweils eine Lasche oder einen Laschenabschnitt (13) an zwei gegenüberliegenden Seiten aufweist, die auf der Oberseite (4) der Einlage (3) aufliegend wieder zu der Unterseite (5) der Einlage (3) geführt sind und zumindest mit ihren freien Enden (23) auf der Unterseite (5) der Einlage an der Trägerschicht (6) befestigt sind.

10. Klimatisierungseinrichtung nach einem der Ansprüche 1 bis 9, **dadurch gekennzeichnet, dass** auf der Oberseite (4) der Einlage (3) mindestens eine Klebeschicht (18) aufgebracht ist, die einen überwiegenden Teil dieser Oberseite bedeckt.

11. Klimatisierungseinrichtung nach einem der Ansprüche 1 bis 10, **dadurch gekennzeichnet, dass** auf der Flächenseite der Lasche oder des Laschenabschnitts (13), die der Innenseite der Trägerschicht (6), die dem Luftverteilungsraum (2) zugewandt ist, entspricht, zumindest über eine Teilfläche mindestens eine Klebeschicht (18) angeordnet ist.

12. Klimatisierungseinrichtung nach einem der Ansprüche 1 bis 11, **dadurch gekennzeichnet, dass** der Lüfter, das Gehäuse eines Lüfters oder die Lüfterhalterung eines Lüfters eine im Wesentlichen formstabile Zunge (16) aufweist, die sich an die Innenseite der den Luftverteilungsraum (2) begrenzenden Teil der Trägerschicht (6) im Wesentlichen flächig anlegt.

13. Klimatisierungseinrichtung nach einem der Ansprüche 1 bis 12, **dadurch gekennzeichnet, dass** in den Luftverteilungsraum (2) ein Versteifungselement (30) eingelegt ist, das eine Grundplatte (31) aufweist, die auf der Trägerschicht (6) zumindest über eine Teilfläche aufliegt.

14. Klimatisierungseinrichtung nach Anspruch 13, **dadurch gekennzeichnet, dass** das Versteifungselement (30) an zwei gegenüberliegenden Seiten Halteteile (32) aufweist, die sich an zwei gegenüberliegenden Seiten der Einlage (3), die den Luftverteilungsraum (2) begrenzen, anlegen und/oder abstützen.

15. Klimatisierungseinrichtung nach einem der Ansprüche 13 oder 14, **dadurch gekennzeichnet, dass** das Versteifungselement (30) aus einem steifen Material mit einer definierten Biegeelastizität gebildet ist, so dass unter Einwirkung von Kräften die Kontur-Abmessungen des Luftverteilungsraums (2) nicht wesentlich verändert werden, jedoch andererseits eine geringe Wölbung der Grundplatte möglich ist.

## Claims

1. Air conditioning device for a vehicle seat, comprising at least one air distribution module (1) having at least one air distribution chamber (2), wherein the air distribution chamber (2) is delimited at least at one part of its outer circumference by an insert (3) having a top side (4) and a bottom side (5), wherein the air distribution chamber (2) is delimited by a carrier layer (6) on the side that is assigned to the bottom side (5) of the insert (3), the carrier layer (6) being connected to the bottom side (5) of the insert (3) at least via a partial surface, and wherein an air supply opening for supplying air into the air distribution chamber (2) is carried out at least partially via at least one of a break (10) in the insert (3) and an opening (11) in the carrier layer, **characterized in that** the air distribution chamber (2) is open on the top side (4) opposite the carrier layer (6), and that the carrier layer (6) comprises at least one extension section (12) which projects beyond the part of the carrier layer that is not covered by the bottom side of the insert and can be used for mounting a fan, a housing of a fan or a fan bracket of a fan on the air distribution module (1), by at least surface parts of the extension section (12) surrounding at least partially at least one of the fan, a housing of a fan and the fan bracket of a fan, wherein the extension section (12), or a respective tab (13) as part of the extension section (12), is provided with at least one adhesive layer on at least one of its top and bottom sides.

2. Air conditioning device according to claim 1, **characterized in that** the extension section (12) is formed integrally with the carrier layer (6).

3. Air conditioning device according to claim 1, **characterized in that** the extension section (12) is placed onto the carrier layer (6).

4. Air conditioning device according to one of claims 1 to 3, **characterized in that** the carrier layer (6) is essentially impermeable to air.

5. Air conditioning device according to claim 4, **characterized in that** the carrier layer (6) is a polyester material (non-woven) that is melted on at least one side surface and/or is compacted to be essentially impermeable to air.

6. Air conditioning device according to one of claims 1 to 5, **characterized in that** the carrier layer (6) comprises a slot (19) in the transition region to the extension section (12), said slot being positioned in the region of the break of the insert (3) that forms an air supply opening at the location where the extension section (12) of the carrier layer (6) starts, and that the extension section (12) is turned over in this area on the top side (4) of the insert (3) and is fastened to the top side (4) of the insert (3).

7. Air conditioning device according to claim 6, **characterized in that** the extension section (12) comprises at least one tab or tab section (13) on at least one free side that is not opposite that side where the extension section (12) is turned over on the top side (4) of the insert (3).

8. Air conditioning device according to claim 7, **characterized in that** the extension section (12) comprises at least one respective tab or tab section (13) on two opposite sides, each being fastened at least with its free ends (23) to the top side (4) of the insert (3).

9. Air conditioning device according to claim 8, **characterized in that** the extension section (12) comprises at least one respective tab or tab section (13) on two opposite sides which while resting on the top side (4) of the insert (3) are guided back to the bottom side (5) of the insert (3) and are fastened at least with their free ends (23) to the bottom side (5) of the insert at the carrier layer (6).

10. Air conditioning device according to one of claims 1 to 9, **characterized in that** at the top side (4) of the insert (3) at least one adhesive layer (18) is applied, which covers a predominant part of this top side.

11. Air conditioning device according to one of claims 1 to 10, **characterized in that** at least one adhesive layer (18) is arranged across at least one partial surface on the surface side of the tab or the tab section (13), which corresponds to the inner side of the carrier layer (6) that faces the air distribution chamber (2).

12. Air conditioning device according to one of claims 1 to 11, **characterized in that** the fan, the housing of a fan or the fan bracket of a fan comprises an essentially dimensionally stable tongue (16) which rests essentially flat against the inside of the part of the carrier layer (6) that delimits the air distribution chamber (2).

13. Air conditioning device according to one of claims 1 to 12, **characterized in that** a reinforcing element is inserted into the air distribution chamber (2) and comprises a base plate (31) which rests at least over a partial surface on the carrier layer (6).

14. Air conditioning device according to claim 13, **characterized in that** the reinforcing element (30) has, on two opposite sides, retaining parts (32) which rest and/or are supported on two opposite sides of the insert (3) that delimit the air distribution chamber (12).

15. Air conditioning device according to one of claims 13 or 14, **characterized in that** the reinforcing element (30) is formed from a rigid material with a defined bending elasticity so that the contour dimensions of the air distribution chamber (2) are not substantially changed under the action of forces, while however allowing for a small curvature of the base plate.

## Revendications

1. Dispositif de climatisation pour un siège de véhicule comprenant au moins un module de répartition d'air (1), qui présente au moins un espace de répartition partie de sa périphérie extérieure par une couche intercalaire (3) qui présente une face supérieure (4) et une face inférieure (5), dans lequel l'espace de répartition d'air (2) est délimité sur la face qui est associée à la face inférieure (5) de la couche intercalaire (3) par une couche de support (6), qui est reliée au moins sur une surface partielle à la face inférieure (5) de la couche intercalaire (3), et dans lequel une ouverture d'amenée d'air permettant d'amener de l'air dans l'espace de répartition d'air (2) s'effectue au moins en partie par une coupure (10) de la couche intercalaire (3) et/ou par une ouverture (11) dans la couche de support, **caractérisé en ce que** l'espace de répartition d'air (2) est ouvert sur la face supérieure (4) opposée à la couche de support (6) et **en ce que** la couche de support (6) présente au moins une section de prolongement (12) qui fait saillie de la partie de la couche de support qui n'est pas couverte par la face inférieure de la couche intercalaire, pour une fixation d'un ventilateur, d'un boîtier d'un ventilateur ou d'un élément de retenue de ventilateur d'un ventilateur sur le module de répartition d'air (1), par le fait qu'au moins des parties superficielles de la section de prolongement (12) entourent au moins en partie le ventilateur et/ou un boîtier d'un ventilateur et/ou l'élément de retenue de ventilateur d'un ventilateur, dans lequel la section de prolongement (12), ou une languette (13) respective en tant que partie de la section de prolongement (12), est pourvue sur sa face supérieure et/ou inférieure d'au moins une couche adhésive (18).

2. Dispositif de climatisation selon la revendication 1, **caractérisé en ce que** la section de prolongement (12) est réalisée d'une seule pièce avec la couche de support (6).

3. Dispositif de climatisation selon la revendication 1, **caractérisé en ce que** la section de prolongement (12) est appliquée contre la couche de support (6).

4. Dispositif de climatisation selon l'une quelconque des revendications 1 à 3, **caractérisé en ce que** la couche de support (6) est sensiblement étanche à l'air.

5. Dispositif de climatisation selon la revendication 4, **caractérisé en ce que** la couche de support (6) est un matériau polyester (non-tissé) qui est fondu sur au moins une surface latérale et/ou comprimé de manière à être sensiblement étanche à l'air.

6. Dispositif de climatisation selon l'une quelconque des revendications 1 à 5, **caractérisé en ce que** la couche de support (6) présente dans la zone de transition menant à la section de prolongement (12) une fente (19), qui est positionnée dans la zone de la coupure de la couche intercalaire (3), laquelle coupure forme une ouverture d'amenée d'air, à l'endroit où la section de prolongement (12) de la couche de support (6) s'applique, et **en ce que** la section de prolongement (12) est rabattue dans cette zone sur la face supérieure (4) de la couche intercalaire (3) et fixée à la face supérieure (4) de la couche intercalaire (3).

7. Dispositif de climatisation selon la revendication 6, **caractérisé en ce que** la section de prolongement (12) présente, sur au moins une face libre qui n'est pas opposée à la face sur laquelle la section de prolongement (12) est rabattue sur la face supérieure (4) de la couche intercalaire (3), au moins une languette ou une section de languette (13).

8. Dispositif de climatisation selon la revendication 7, **caractérisé en ce que** la section de prolongement (12) présente au moins respectivement une languette ou une section de languette (13) sur deux faces opposées, lesquelles languettes sont fixées chacune au moins par leurs extrémités libres (23) sur la face supérieure (4) de la couche intercalaire (3).

9. Dispositif de climatisation selon la revendication 8, **caractérisé en ce que** la section de prolongement (12) présente au moins respectivement une languette ou une section de languette (13) sur deux faces opposées, lesquelles languettes, en reposant sur la face supérieure (4) de la couche intercalaire (3), sont à nouveau guidées vers la face inférieure (5) de la couche intercalaire (3) et sont fixées à la couche de support (6) au moins par leurs extrémités libres (23) sur la face inférieure (5) de la couche intercalaire.

10. Dispositif de climatisation selon l'une quelconque des revendications 1 à 9, **caractérisé en ce qu'**au moins une couche adhésive (18), qui recouvre une majeure partie de cette face supérieure, est appliquée sur la face supérieure (4) de la couche intercalaire (3).

11. Dispositif de climatisation selon l'une quelconque des revendications 1 à 10, **caractérisé en ce qu'**au moins une couche adhésive (18) est agencée au moins sur une surface partielle sur la face superficielle de la languette ou de la section de languette (13) qui correspond à la face intérieure de la couche de support (6) qui est tournée vers l'espace de répartition d'air (2).

12. Dispositif de climatisation selon l'une quelconque des revendications 1 à 11, **caractérisé en ce que** le ventilateur, le boîtier d'un ventilateur ou l'élément de retenue de ventilateur d'un ventilateur présente une languette (16) sensiblement indéformable qui s'applique sensiblement à plat sur la face intérieure de la partie de la couche de support (6) délimitant l'espace de répartition d'air (2).

13. Dispositif de climatisation selon l'une quelconque des revendications 1 à 12, **caractérisé en ce qu'**un élément de renforcement (30), qui présente une plaque de base (31) reposant au moins sur une surface partielle sur la couche de support (6), est inséré dans l'espace de répartition d'air (2).

14. Dispositif de climatisation selon la revendication 13, **caractérisé en ce que** l'élément de renforcement (30) présente sur deux faces opposées des parties de retenue (32) qui s'appliquent et/ou s'appuient contre deux faces opposées de la couche intercalaire (3) qui délimitent l'espace de répartition d'air (2).

15. Dispositif de climatisation selon l'une quelconque des revendications 13 ou 14, **caractérisé en ce que** l'élément de renforcement (30) est formé d'un matériau rigide présentant une élasticité en flexion définie, de sorte que, sous l'effet de forces, les dimensions du contour de l'espace de répartition d'air (2) ne sont pas sensiblement modifiées, mais une légère courbure de la plaque de base est d'autre part possible.
